Europäisches Patentamt

(19) European Patent Office

Office européen des brevets

(11) Publication number: **0 133 421**
**B1**

(12) **EUROPEAN PATENT SPECIFICATION**

(45) Date of publication of patent specification: **06.04.88**

(51) Int. Cl.⁴: **A 23 N 1/00**

(21) Application number: **84830228.7**

(22) Date of filing: **26.07.84**

(54) **A device for the extraction of juice from fruits, especially citrus fruits and the like.**

(30) Priority: **05.08.83 IT 4881683**

(43) Date of publication of application:
**20.02.85 Bulletin 85/08**

(45) Publication of the grant of the patent:
**06.04.88 Bulletin 88/14**

(84) Designated Contracting States:
**AT CH DE FR GB LI LU SE**

(56) References cited:
**US-A-3 162 114**
**US-A-3 269 301**
**US-A-3 682 092**

(73) Proprietor: **AGROFONTE s.r.l.**
**Stradone Scipione Maffei 14**
**I-32121 Verona (IT)**

(72) Inventor: **Gianfranco, Aldegheri**
**Via Polidore 5**
**Verona (IT)**

(74) Representative: **Taliercio, Antonio et al**
**Via Piemonte, 26**
**I-00187 Roma (IT)**

Courier Press, Leamington Spa, England.

## Description

The present invention relates to a device for the extraction of juice from fruits, especially citrus fruit and the like. More particularly, the present invention relates to a device designed to carry out the squeezing of the whole fruit body together with its rind or peel, for instance grape-fruit, lemon.

Devices or machines are already known in the prior art for the extraction of juice from fruits by squeezing the whole fruit body. However, it is to be remarked that generally such devices do not allow to obtain a high production yields and acceptable reductions of the contamination of the juice itself due to the essential oils contained in the rind or peel. Moreover, such devices do not provide suitable systems for a positive regulation of the piercing and the squeezing operations so as to make possible an increase in the useful working times.

The prior technological realization proximate to the subject matter of this invention, is disclosed in the US—A—3 682 092 (Roto Manufacturing Co.) concerning a device for the extraction of the juice of citrus fruits, the apparatus comprising a ram head, operating as a compression means, encircling and holding the whole fruit body. The ram head is movable along the longitudinal axis and pushes the fruit in the direction of a coring knife, which pierces the fruit and removes a plug from the rind. The knife is a hollow cylinder provided with opening on its lateral surface. The squeezing is carried out by a ram which is longitudinally movable in a forward and rearward manner. During the squeezing process the fruit juice flows out of the openings of the knife. After squeezing, the plug and the squeezed fruit are extracted by ejector means which are associated to the knife and which are movable in a longitudinal and reciprocating manner. A tappet system, consisting of posts, coupled with slides which are connected to a cross head, regulates the motion of the ejector means.

In particular said device did not prove to be a reliable appratus with respect to the control of the movement of the extractors by means of the tappet system and in anyway unsuited assure to the compression means the structural strength necessary to avoid the deformation included by the squeezing means.

Furthermore the disposition of the piercing means which are not rigidly connected to the locating plate of the device does not support a correct operational dynamic.

Accordingly it is an object of this invention to realize a device which allows to extract the maximum juice amount as well as the minimum amount of essential oils from a fruit together with its rind or peel, such as for example grape-fruit, through piercing and squeezing operations, without incurring in the abovesaid drawbacks.

Specifically is an object of this invention that of supplying said device with means capable to pierce the fruit rind or peel to remove from the same some small pieces or plugs so that the juice can flow easily out of the openings obtained through the removal of said plugs, with the possibility of replacing such plugs into their seats and of expelling the fruit after squeezing being their movement correctly controlled by the tappet system.

In particular, the technical teaching of the invention of adopting a structural parts' configuration, hereinbelow described, to control the movement of the extractors and the locating plate activated by the tappet system, avoids said drawbacks.

Moreover the suggestion of using piercing means rigidly arranged at the counteracting group and compression means having a solid construction removes the remaining drawbacks of the considered prior art.

The device of this invention allows to carry out advantageously an automatic and rapid squeezing operation and in a way which warrants a better hygienic protection of the fruits.

A further advantage is that of allowing an easy cleaning operation of the fundamental machine components through their rapid and easy disassembly.

All such requirements are opportunely satisfied by the device of the present invention, including the abovesaid structural features in which device the extraction of juice from a fruit together with its rind or peel, especially a citrus fruit, is carried out blocking first the fruit body from opposite directions without altering the original fruit shape in an appreciable way, piercing then the fruit rind and successively pressing the fruit so that the juice flows out of the openings obtained during the piercing operation.

Thus it is a specific object of the present invention to realize a device for the extraction of juice from fruits, especially from citrus fruit and the like, comprising, in combination, compression means designed to be arranged in the correct working position, which is a function of the fruit size, through the displacement along a longitudinal axis so as to encircle the whole fruit body and to block the same in the working position between said compression means and a counteracting group, and successively to push it against a locating plate housed inside the counteracting group and having a hole to allow the passage of piercing means which are provided, on its lateral surface, with openings, said piercing means being capable of penetrating the fruit rind or peel so as to remove small pieces or plugs from the same, and squeezing means which can move longitudinally and in a reciprocating manner in order to press the fruit body and to cause the fruit juice to flow out of said openings in the piercing means, extractor means which can move in the longitudinal sense and in a reciprocating manner within the piercing means, said extractor means being associated with said piercing means being controlled by a tappet system and designed to extract the plugs after the piercing operation, to expel the squeezed fruit and in which said plugs are subsequently replaced, wherein said piercing means are fixedly arranged at said counteracting group and wherein said compression means are of solid construction so as to be not deformable by said squeezing means and wherein the squeezing means and the compression means are integrally connected to a sliding carriage and wherein a pressure spring is operatively arranged between said sliding carriage and the compression means, so that when a squeezing force is applied to the said device, said spring is compressed as the sliding carriage displaces the squeezing means in a forward direction to squeeze the fruit and wherein said tappet system is controlled by two stops, the first of which is located in the compression means and the second of which is located in the sliding carriage, such that when the first stop is reached, said extractor means and said locating plate are pushed by the tappet system into their outermost position until said second stop is reached and then when the squeezing force is released, the biasing force of the spring forces the extractor means and the locating plate back to their innermost position.

Preferably said carriage slides along a longitudinal cylindrical guide fastened to the basement of the device. Indeed, when the compression member, in its longitudinal motion, reaches its stop final position on the counteracting means, the displacement starts of the squeezing means, due to the dragging action of the carriage, such displacement going on until the position is reached in which the squeezing operation is complete. When the squeezing is over, the squeezing means due to the action of the spring come back to their original position (which corresponds to the maximum spring extension) with respect to the compression means so that, when the spring is fully extended, the compression means come back to their initial position by the action of the sliding carriage, and the machine is reset in the condition for starting a new squeezing cycle. The piercing means are preferably made up of a hollow cylindrical member whose front end is active in the piercing operation and has a sawtooth profile, its outside lateral surface being partially provided with holes which are arranged in two separate zones and allow the extraction of juice and its flow to the collecting means (not shown).

The tappet system which controls the reciprocating motion of the extractor means through a linking bar, is made up of two tappet groups which are housed within locating bushes that are contained within the bodies of the compression members and of the counteracting means, at the ends of said groups being also housed the guide bar ends of the sliding carriage which drags the compression as well as the squeezing means.

By means of the opposite motion of the movable members with respect to the stationary means, the replacement is first obtained of the plugs into the fruit rind or peel, and then the final expulsion is obtained of the fruit from the squeezing device.

The present invention will be described in the following with particular reference to one of its preferred embodiments, which is illustrated in the enclosed drawings, wherein:

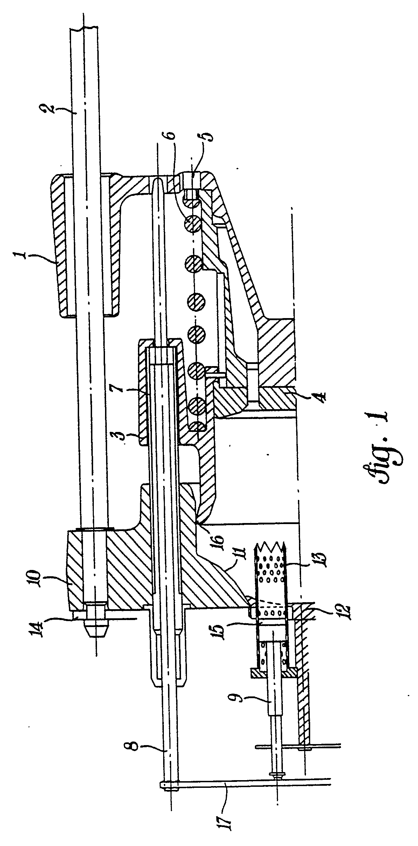

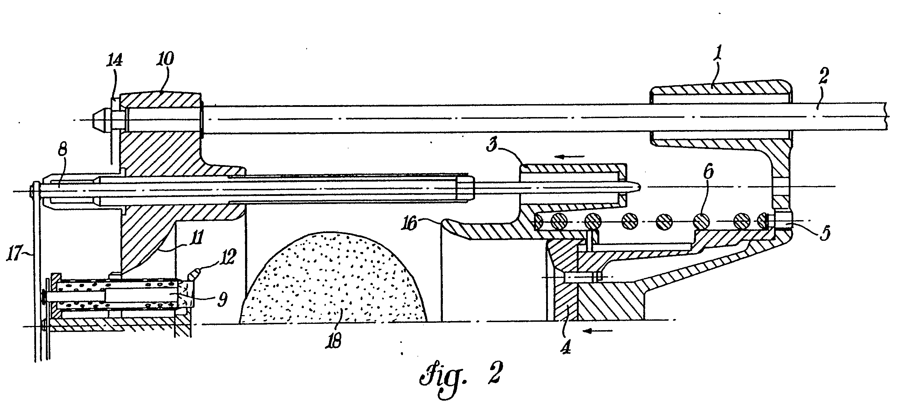

Figures 1—7 show, in horizontal cross-section, the various positions taken up by the device according to this invention, from the initial up to the final phase of the squeezing operations, making reference to one of the symmetrical halves of the present device.

With particular reference to the drawings, a carriage 1 can be observed moving in a reciprocating way and with a straight line motion along the longitudinal axis of the machine, and on the cylindrical guides 2 which are fastened to the machine base and support the counteracting group 10 at one of their ends.

The squeezing means represented in 4 as well as the compression means 3, both being made integral with the carriage 1 through the linking system 5 are kept in their original position, which is pointed out in Figure 1, by the full extension of spring 6.

The locating bushes 7 of the tappet system 8 for controlling the extraction means 9 are placed on the compression member 3 of the fruit 18. The counteracting group 10, fastened to the cylindrical guides 2 for the sliding motion of the carriage, and supported by the bracket 14, counteracts the compression member 3. A part 11 is present on the lower inner portion of the counteracting group 10, said part 11 begin of a substantially frustum shape which is suitable to retain the fruit during squeezing.

The locating system is housed within the group 10, said system being made up of a locating plate 12 provided with holes for the passage of the piercing members which are made up of hollow cylindrical bodies 13 having lateral surfaces which carry openings, as well as for the passage of the extractors 9.

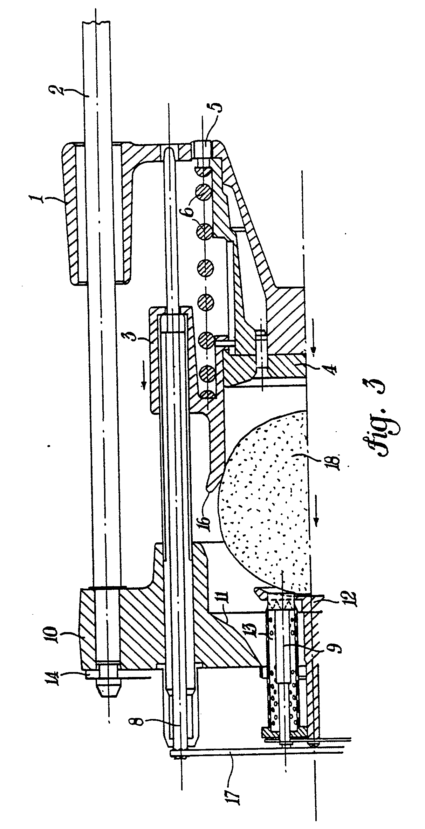

A manifold for the collection of the juice is located under the outside part of the piercing members 13, such manifold (not shown) being also supported by the bracket 14. A servo-controlled bracket (not shown) is located before the squeezing group 4 and under the same, such bracket being designed to temporarily support the fruit 18 at the beginning of the operations, until the compression group 3, with its outer edge 16, and the counteracting group 10 come to a sufficient distance to support the fruit itself within the space between them (Figure 3).

During machine operation, the compression group 3, pulled by the sliding carriage 1, goes on until its front edge 16 rests on the fruit and successively pushes the same before. As a result of such movement, the fruit 18 comes in contact with the locating plate 12, the piercing members 13 and the extracting members 9 (Figure 3). During its further advancement motion, the fruit is pierced by the fixed piercing members 13, whereas the locating plate 12 and the extracting means 9 go back. The rind plugs 15, removed from the surface of the fruit 18, reach the fore side of the extracting means 9 and rest on the same.

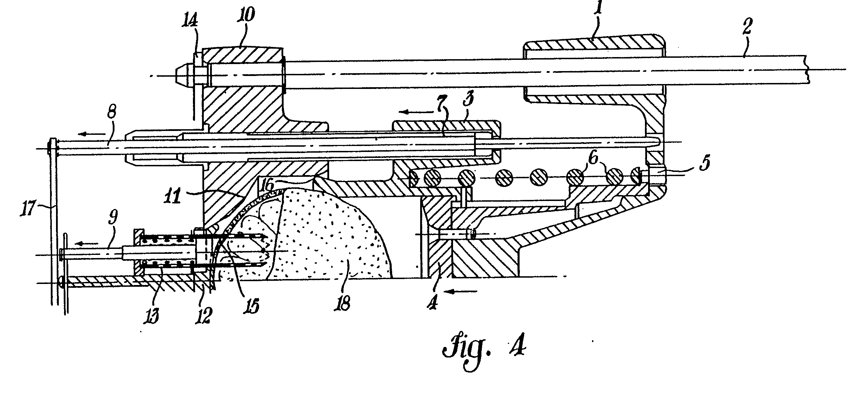

The next movement of the compression group 3 causes the fruit 18 to further advance, until the fruit itself reaches the frustum shaped surface 11 of the counteracting member 10 (Figure 4) and rests on the same; successively, the outer edge 16 of the compression group 3 also rests against the fixed counteracting group 10. In this phase, locating plate 12 and the extracting means 9 have pushed in the outside direction the tappet linking bar 17, said tappets being also moved in the sense of the arrow, through the compression of a counter spring enclosing the tappets inside the bush 7.

The next movement of the sliding carriage 1 displaces in the forward direction the squeezing group 4, with the simultaneous compression of the spring 6. Thus, the squeezing is started of the fruit 18.

The volume available to the fruit is lowered, so that the juice is squeezed out the fruit through a channel passing in the inside space of the piercing members 9 as well as through the holes provided on the surfaces of said members, until the juice is discharged into a collecting manifold.

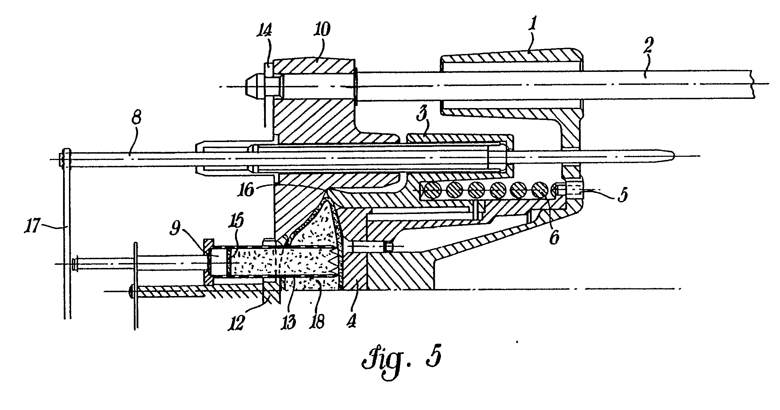

It is to be observed that said holes on the surfaces of the piercing members 9 are not arranged along their whole length, but some portions of the piercing members are free from holes, so that during the squeezing operation (Figure 5) a perfect hydraulic seal is surely obtained on the whole outside surface of the fruit and, as a result, the passage is prevented of the rind essential oils into the juice.

When the maximum advancement position of the squeezing group 4 is reached, the extracting means 9 are in the most retired position and the plugs 15 rest on the fore side of said extracting means so as to work as members which close their inside hollows and to make the outflow of juice easier.

Before the movement of the carriage 1 is inverted, a short stop occurs to allow the complete outflow of the juice from the fruit after the same has been fully squeezed.

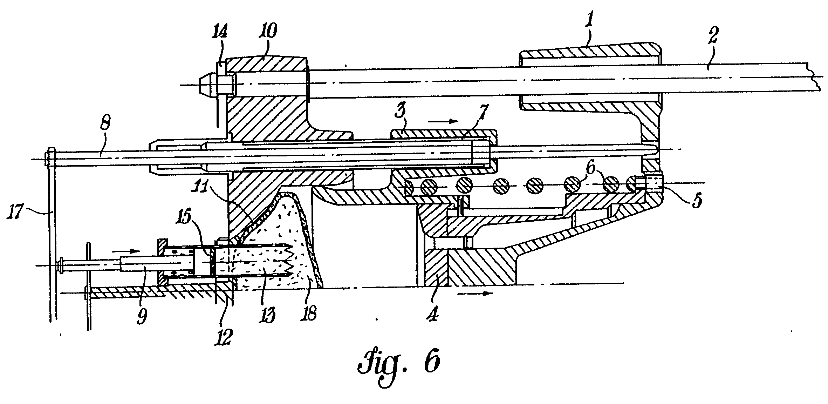

When the movement is inverted, the contact between the compression group 3 and the corresponding ledge on the conical portion 11 of the counteracting group 10 (Figure 6) ends.

At that point, the tappets 8 intervene, such tappets, being pulled by the spring 6, making the extraction means 9 to advance, so that said extraction means go again in the forward direction together with the rind plugs 15. During such motion the plugs 15 carry out a cleaning operation of the piercing members 9, with removal of fibers and of other residues which are possibly present within the holes for the passage of juice.

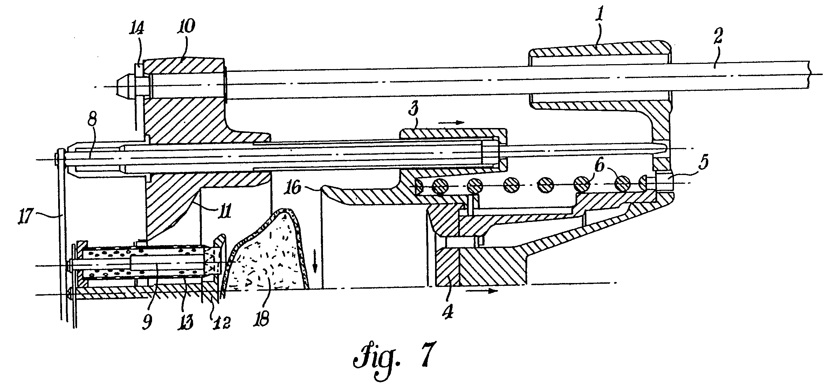

The extracting means 9, during the continuation of their forward motion, replace the plugs 15 into the rind of the fruit 18, and at last the locating plate 12, in the position of maximum advancement, causes the expulsion of said rind out the piercing members 9, and the falling of the rind into a suitable container (Figure 7).

It is to be observed that the action of the counter spring 6 causes the backward motion of the squeezing group 4 when the advancement motion induced by the sliding carriage 1 stops.

## Claims

1. A device for the extraction of juice from fruits, especially from citrus fruit and the like, comprising, in combination, compression means (3) designed to be arranged in the correct working position, which is a function of the fruit size, through the displacement along a longitudinal axis so as to encircle the whole fruit body (18) and to block the same in the working position between said compression means (3) and a counteracting group (10), and successively to push it against a locating plate (12) housed inside the counteracting group (10) and having a hole to allow the passage of piercing means (13) which is provided, on its lateral surface, with openings, said piercing means (13) being capable of penetrating the fruit rind or peel so as to remove small pieces or plugs (15) from the same, and squeezing means (4) which can move longitudinally and in a reciprocating manner in order to press the fruit body (18) and to cause the fruit juice to flow out of said openings in the piercing means (13), extractor means (9) which can move in the longitudinal sense and in a reciprocating manner within the piercing means (13), said extractor means (9) being associated with said piercing means (13) being controlled by a tappet system (8) and designed to extract the plugs (15) after the piercing operation and to expell the squeezed fruit in which said plugs (15) are subsequently replaced, characterized by the fact that said piercing means (13) are fixedly arranged at said counteracting group (10) and that said compression means (3) are of solid construction so as to be not deformable by said squeezing means (4) and that the squeezing means (4) and the compression means (3) are integrally connected to a sliding carriage (1) and that a pressure spring (6) is operatively arranged between said sliding carriage (1) and the compression means (3), so that when a squeezing force is applied to the said device, said spring (6) is compressed as the sliding carriage (1) displaces the squeezing means (4) in a forward direction to squeeze the fruit and that said tappet system (8) is controlled by two stops, the first of which is located in the compression means (3) and the second of which is located in the sliding carriage (1), such that when the first stop is reached, said extractor means (9) and said locating plate (12) are pushed by the tappet system (8) into their outermost position until said second stop is reached and then when the squeezing force is released, the biasing force of the spring (6) forces the extractor means (9) and the locating plate (12) back to their innermost position.

2. A device according to claim 1 for the extraction of juice from fruits, characterized in that said sliding carriage (1) is movable along a longitudinal cylindrical guide bar (2) fastened to a basement of the device.

3. A device for the extraction of juice from fruits according to claims 1 and 2, characterized in that said piercing means (13) are made of a hollow cylindrical member whose end, which is active in the piercing operation, has a sawtooth profile and the outside lateral surface is partially provided with holes which are arranged into two separate zones for the extraction of juice and for causing it to flow into collection means.

4. A device for the extraction of juice from fruits according to each of preceding claims, characterized in that said tappet system (8) is lodged, partially along its length, within a locating bush (7) contained in said compression means (3).

5. A device for the extraction of juice from fruits according to each of the preceding claims, characterized in that said counteracting group (10) has an inside surface (11) on which said fruit is pressed, said surface being substantially frustum shaped, said counteracting group (10) being fastened to the basement of the device through the carriage guide bar (2).

**Patentansprüche**

1. Vorrichtung zum Auspressen des Saftes aus Fruechten, insbesondere aus Zitrusfruechten und dgl., die in Kombination folgende Mittel enthaelt:

— in die richtige, von der Groesse der Frucht abhaengige Arbeitsstellung verstellbare Pressmittel (3), wobei die Verstellung entlang einer Laengsachse stattfindet, um so den ganzen Fruchtkoerper zu umarmen, in der Arbeitsstellung zwischen den genannten Pressmitteln (3) und einer entgegenwirkenden Gruppe (10) zu blockieren und dann gegen eine, innerhalb der entgegenwirkenden Gruppe (10) angebrachten Anschlagplatte (12) zu druecken, die ein den Durchgang eines Stauchmittels (13) gestattendes Loch aufweist, wobei diese Stauchmittel (13) an deren Seitenflache mit Oeffnungen versehen und in die Fruchtschale eindrigbar sind, um somit kleine Schalenstueckchen der Frucht abzunehmen;

— in Laengsrichtung hin und her bewegbare Quetschmittel (4) zum Auspressen des Fruchtkoerpers (18) und zum Abfluss des Saften durch die genannten Oeffnungen des Stauchmittels (13);

— Extraktormittel (9), die sich innerhalb der Stauchmittel (13) in der Laengsrichtung hin und her bewegen, mit den genannten Stauchmittel (13) verbunden sind, durch ein Stoesselsystem (8) betaetig werden und zum Abnehmen von Schalenstueckchen (15) nach dem Stechvorgang und zum Auswerfen der ausgepressten Frucht, nachdem die Schalenstueckchen in die Frucht wieder eingesetzt wurden, bestimmt sind,

dadurch gekennzeichnet, dass die genannten Stauchmittel (13) in der genannten entgegenwirkenden Gruppe (10) befestigt sind und die genannten Presmittel (3) einen starken Aufbau haben, um von den genannten Questschmittel (4) nicht verformt zu werden, und dass die Quetschmittel (4) und die Pressmittel (3) mit einem Fahrgestell (1) fest verbunden sind und dass eine Druckfeder (6) zwischen dem Fahrgestell (1) und den Pressmitteln (3) angeordnet ist, so dass beim Anbringen einer Druckkraft an die genannte Vorrichtung die genannte Feder (6) zusammengedrueckt wird, so bald als das Fahrgestell (1) die Quetschmittel (4) in Vorwaerstrichtung zum Auspressen der Frucht verstellt, und dass das genannte Steoesselsystem (8) durch zwei Anschlagstuecke gesteuert ist, von denen das erste in den Pressmitteln (3) und das zweite im Fahrgestell (1) angeordnet ist, so dass beim Ankommen an das erste Auschlagstueck die genannten Extraktormittel (9) und die genannte Auschlagsplatte (12) durch das Stoesselsystem (8) in deren aeusserste Stellung bis zum zweiten Anschlagstueck verschoben werden, und dann bei Erniedrigung der Quetschdruck, die Druckkraft der Feder (6) verstellt die Extraktormittel (9) und die Auschlagplatte (12) zurueck zu deren innersten Stellung.

2. Vorrichtung nach Anspruch 1 zum Auspressen des Saftes aus Fruechten, dadurch gekennzeichnet, dass das genannte Fahrgestell (1) entlang einer zylindrischen Laengsfuehrungsstange (2) verstellbar ist, die an ein Gehaeuse der Vorrichtung befestigt ist.

3. Vorrichtung zum Ausspressen des Saftes aus Fruechten nach Anspruechen 1 und 2, dadurch gekennzeichnet, dass die genannten Stauchmittel (13) aus einem Hohlzylinderglied bestehen, dessen am Stauchvorgang wirksames Ende ein Saegezahnprofil aufweist und dessen aeussere Seitenflaeche in zwei getrennten Zonen teilweise mit Oeffnungen versehen ist, die zur Extrahierung und zum Auffangen des Saftes in einem Behaelter dienen.

4. Vorrichtung zum Auspressen des Saftes aus Fruechten nach jedem der vorhergehenden Ansprueche, dadurch gekennzeichnet, dass das genannte Stoechelsystem (8) seiner Laenge entlang teilweise innerhalb einer Anschlagbuchse (7) angeordnet ist, die in den genannten Pressmitteln (3) enthalten ist.

5. Vorrichtung zum Auspressen des Saftes aus Fruechten nach jedem der einem vorhergehenden Ansprueche, dadurch gekennzeichnet, dass die genannte entgegenwirkende Gruppe (10) eine innere Flaeche (11) aufweist, auf der die Freucht gepresst wird, wobei diese Flaeche eine wesentlich Kegelstumpffoermig ausgestaltet ist und die gennannte entgegenwirkende Gruppe (10) an das Gehaeuse der Vorrichtung durch die Fuehrungsstange (2) des Fahrgestells befestigt ist.

**Revendications**

1. Dispositif pour l'extraction du jus des fruits, particuliermènt des citrus fruits, comprenant en combination moyens de compression (3) destinés à être disposés dans la position correcte de travail, que est la fonction de la grosseur des fruits, au moyen de déplacement le long de l'axe longitudinale, de façon à embrasser le corps entier du fruit et bloquer le même dans la position de travail entre ledit moyen de compression (3) et un groupe d'action contraire (10) et dans la suite pousser le fruit contre une plaque de butée (12) disposée au-dedans le groupe d'action contraire (10) et ayant un trou pour permettre le passage d'un moyen perforateur (13), qui a sur sa surface latérale des ouvertures, ledit moyen perforateur (13) étant capable de pénétrer dans la peau du fruit et enlevèr les petite morceaux (15) de la peau et un moyen presseur (14) que peut se déplacer longitudinalement par un mouvement alternatif pour presser le corps du fruit et fair s'écouler le jus à travers lesdites ouvertures du moyen perforateur (13), un moyen extracteur (9) qui peut se déplacer par mouvement alternatif dans la direction longitudinale au-dedans le moyen perforateur (13), ledit moyen extracteur (9) ayant associé avec ledit moyen perforateur (13), contrôlé par un système des poussoirs (8) et destiné à extraire les morceaux (15) de la peau après l'operation de perforation et à expulser le fruit pressé, dans lequel lesdits morceaux (15) sont replacés, caractérisé en ce que ledit moyen perforateur (13) est disposé solidement dans ledite groupe d'action contraire (10) et ledit moyen de compression (3) a une construction solide de façon à n'être pas deformable par ledit moyen presseur (4), ledit moyen presseur (4) et ledit moyen de compression (3) sont intégralement joints avec un chariot coulissant (1) et un ressort de compression (6) est disposé activement entre ledit chariot coulissant (1) et le moyen de compression (3), de façon que quand une force de compression est appliquée à ledit dispositif, ledite ressort (6) vient à être comprimé à mesure que le chariot coulissant (1) déplace le moyen presseur (4) en avant pour presser le fruit et que ledit système des poussoirs (8) est controlé par deux pièces de butée, le première de ces pièces étant disposé au-dedans dedit chariot coulissant (1), de façon que quand le première pièce de butée est atteint ledit moyen extracteur (9) et ladite plaque de butée (12) sont pressés par le système des poussoirs (8) jusqu'à leur position le plus extérieur de façon à ateindre le seconde pièce de butée et dans la suite, quand la force de compression diminue, la force de pression du ressort (6) deplace le moyen extracteur (9) et la plaque de butée (12) en arriér jusqu'à leur position le plus intérieur.

2. Dispositif selon la revendication 1 pour l'extraction de jus des fruits, caractérisé en ce que ledit charriot coulissant (1) est déplaceable le long d'une barre de guidage cylindrique longitudinale (2) fixée à un soubassement du dispositif.

3. Dispositif pour l'extraction de jus des fruits selon le revendications 1 et 2, caractérisé en ce que ledit moyen de perforation (13) consiste d'un élément cylindrique creux ayant une extrémité qu'est active pendant l'operation de perforation et a un profil en dent de scie, la surface latérale dedit élément cylindrique creux étant munie de trous placés dans les deux zones separées pour l'extraction du jus et pour le fair s'écouler dans un moyen de collectage.

4. Dispositif pour l'extraction du jus des fruits selon chacune des revendications précédentes, caractérisé en ce que ledit system des poussoirs (8) est disposé, partiellement le long de sa longuerre, dans une boite de support (7) contenue dans ledit moyen de compression (3).

5. Dispositif pour l'extraction du jus de fruits selon chacune des revendications précédentes, caractérisé en ce que ledit groupe d'action contraire (10) a une surface interieure (11) sur laquelle ledit fruit est pressé, ladite surface étant substantiellement de forme tronconique et ledit groupe d'action contraire (10) étant fixé au soubassement du dispositif au moyen de la barre de guidage (2).

*Fig. 1*

0 133 421

Fig. 2

0 133 421

Fig. 3

Fig. 4

0 133 421

_Fig. 5_

*Fig. 6*

*fig. 7*